# FASCICULE DE BREVET EUROPEEN

(11) **EP 1 691 227 B1**
(45) Date de publication et mention de la délivrance du brevet: **23.09.2009**
(21) Numéro de dépôt: 06290232.5
(22) Date de dépôt: 09.02.2006
(51) Int. Cl.: H04N 5/225, H04N 5/232, H01L 27/146, G03B 3/10, G03B 17/12

(54) **Dispositif comportant un module de caméra à mise au point automatique et procédé de montage correspondant**
Vorrichtung, umfassend ein Kameramodul mit automatischer Fokussierung und Montageverfahren dafür
Device including an automatic focus camera module and corresponding method of assembly

(30) Priorité: 10.02.2005 FR 0501330
(43) Date de publication de la demande: 16.08.2006
(73) Titulaire: STMicroelectronics SA, 92120 Montrouge (FR)
(72) Inventeur: Vittu, Julien, 38340 Voreppe (FR)
(74) Mandataire: Bentz, Jean-Paul

(56) Documents cités:
- EP-A- 1 180 718
- US-A- 5 506 401
- US-A1- 2002 113 296
- US-A1- 2004 119 870
- US-A1- 2004 201 773
- PATENT ABSTRACTS OF JAPAN vol. 017, no. 587 (E-1453), 26 octobre 1993 (1993-10-26) -& JP 05 176208 A (SONY CORP), 13 juillet 1993 (1993-07-13)
- PATENT ABSTRACTS OF JAPAN vol. 1999, no. 04, 30 avril 1999 (1999-04-30) -& JP 11 017997 A (MATSUSHITA ELECTRON CORP), 22 janvier 1999 (1999-01-22)

## Description

La présente invention concerne le domaine des capteurs d'image et plus particulièrement des modules de caméra comportant un capteur d'image, un objectif et un système micro-électromécanique de mise au point placé au-dessus du capteur d'image. Elle s'applique notamment mais non exclusivement aux appareils photos, aux caméras, aux téléphones mobiles ou à tout autre dispositif intégrant un tel module de caméra.

Plus précisément, l'invention concerne, selon un premier aspect, un dispositif comportant un module de caméra à mise au point automatique selon la préambule de la revendication 1.

Un dispositif de ce type, connu dans l'état de la technique par ex. de US 2004/0201773 A1, est présenté sur la figure 1. Il est constitué d'un boîtier optique 1 fixé sur une carte de circuit imprimé intermédiaire 2 sur laquelle est monté un microprocesseur 4 dont le rôle est de gérer le boîtier optique 1. Le boîtier optique 1 comprend une puce de circuit intégré appelée puce optique sur laquelle est montée un capteur d'image et un système micro-électromécanique de mise au point, non visible sur cette figure. Le système micro-électromécanique, également appelé MEMS (Micro Electronic Mechanical System) par l'homme du métier, comprend un objectif 3 constitué d'un ensemble de lentilles mobiles et d'un moteur permettant de régler la mise au point de l'objectif 3. Le capteur capte des images à travers l'objectif 3 et envoie des signaux d'image au microprocesseur 4 par des liaisons filaires 5 externes au boîtier optique 1. Le microprocesseur 4 génère à partir de ces signaux d'image des signaux de commande de mise au point et les transmet au système micro-électromécanique également par des liaisons filaires externes 5. Par ailleurs, des signaux d'image provenant du capteur d'image, éventuellement prétraités par le microprocesseur 4, sont transmis à une carte de circuit imprimé principale appelée également carte mère, par l'intermédiaire d'un câble multiconducteur 6 (en nappe sur la figure) transmettant également la puissance électrique au système micro-électromécanique, au capteur et au microprocesseur 4.

Un tel dispositif nécessite donc de nombreuses connexions filaires externes entre le boîtier optique, la carte de circuit imprimé intermédiaire et la carte de circuit imprimé principale, ce qui implique de nombreuses opérations d'assemblage et de connexions généralement par soudure. Il en résulte des problèmes de complexité de réalisation, de fiabilité, mais également un encombrement qui limite les possibilités de miniaturisation.

La présente invention a pour but de remédier à ces inconvénients.

En particulier, un objectif de l'invention est de supprimer au moins une partie des connexions externes, et par là-même de miniaturiser le dispositif, d'accroître la fiabilité mais également de simplifier la conception et la fabrication en réduisant les étapes d'assemblage.

A cet effet, le dispositif de l'invention, par ailleurs conforme à la définition générique qu'en donne le préambule ci-dessus, est essentiellement caractérisé en ce que lesdites première et seconde zones de contact et ledit moyen de fixation assurent au moins une connexion électrique entre ledit microprocesseur et ledit moyen de focalisation.

Ladite puce optique et ledit bloc optique sont pourvus au moins de première et seconde zones de contact respectives en regard l'une de l'autre et d'un moyen de fixation dudit bloc optique à ladite puce optique, lesdites première et seconde zones de contact et ledit moyen de fixation assurant au moins une connexion électrique entre ledit microprocesseur et ledit moyen de focalisation.

Avantageusement, ledit moyen de fixation est une colle conductrice anisotrope interposée entre lesdites première et seconde zones de contact.

Dans le cas où le dispositif comprend une carte de circuit imprimé, ladite puce optique est par exemple montée sur la carte de circuit imprimé par au moins une liaison électrique assurant le transfert de puissance électrique de ladite carte de circuit imprimée vers ladite puce optique et ledit bloc optique.

Dans le même cas où le dispositif comprend une carte de circuit imprimé, ladite puce optique est par exemple montée sur ladite carte de circuit imprimé par au moins une liaison électrique assurant le transfert desdits signaux d'image entre ladite carte de circuit imprimé et ladite puce optique.

Ladite liaison électrique peut comprendre au moins une interconnexion métallique traversante, disposée dans ledit substrat de ladite puce optique et au moins une bille de connexion fixée sur une extrémité de ladite interconnexion métallique traversante apparaissant sur une seconde face du substrat, opposée à ladite première face de ladite puce optique.

La présente invention a également pour objet un procédé de fabrication d'un module de caméra de mise au point automatique selon la revendication 9.

Avantageusement, le procédé comprend une étape de fixation d'au moins une bille de connexion à une extrémité d'une interconnexion métallique traversante disposée dans le substrat et apparaissant sur une seconde face dudit substrat opposée à ladite première face, et une étape de fixation et de connexion dudit module de caméra sur une carte de circuit imprimée à l'aide de ladite bille de connexion.

Ces objets, caractéristiques et avantages ainsi que d'autres de la présente invention seront exposés plus en détail dans la description suivante d'un mode de réalisation préféré de l'invention, à titre non limitatif, en référence aux figures parmi lesquelles :
- La figure 1, déjà décrite, représente un module de caméra connu dans l'art antérieur ;
- La figure 2 représente sous la forme d'un schéma de principe un module de caméra selon l' invention ;
- La figure 3 représente une vue en coupe éclatée des composants du module de caméra selon l'invention ;
- La figure 4 représente une vue en coupe du module de caméra représenté sur la figure 3.

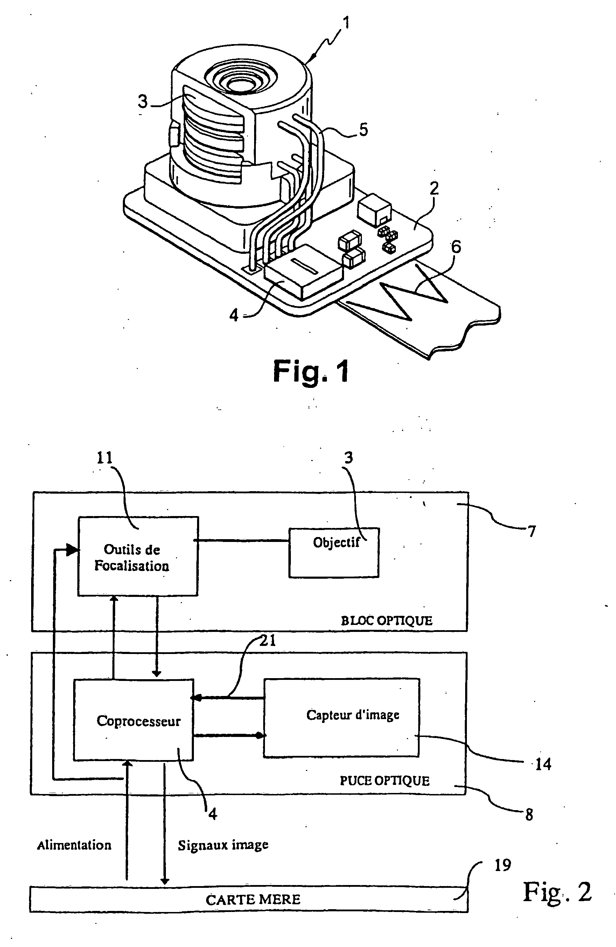

En se référant au schéma représenté sur la figure 2, le dispositif optique selon l'invention comprend un module de caméra et une carte de circuit imprimé appelée carte mère 19. Le module de caméra comprend deux parties principales : un bloc optique 7 appelé également MEMS et une puce de circuit intégré appelée puce optique 8. Le bloc optique 7 comprend en particulier un objectif 3 constitué d'un ensemble de lentilles au moins en partie mobiles et des moyens de focalisation 11 comprenant par exemple un moteur et des engrenages permettant d'ajuster la position des lentilles mobiles de l'objectif 3. La puce optique 8 quant à elle comprend un capteur d'image 14 et, selon l'invention un microprocesseur 4.

Le capteur d'image 14 envoie des signaux d'image au microprocesseur 4 au travers d'une liaison 21 sur le substrat de la puce optique 8. Le microprocesseur 4 traite au préalable ces signaux d'image et, d'une part envoie les signaux d'image traités à la carte mère 19 et d'autre part élabore sur la base de ces signaux d'image un signal de commande destiné aux moyens de focalisation 11 pour assurer la mise au point de l'objectif 3. La puce optique 8 ainsi que les moyens de focalisation 11 reçoivent une puissance électrique suffisante fournie par la carte mère 19 au travers de la puce optique 8.

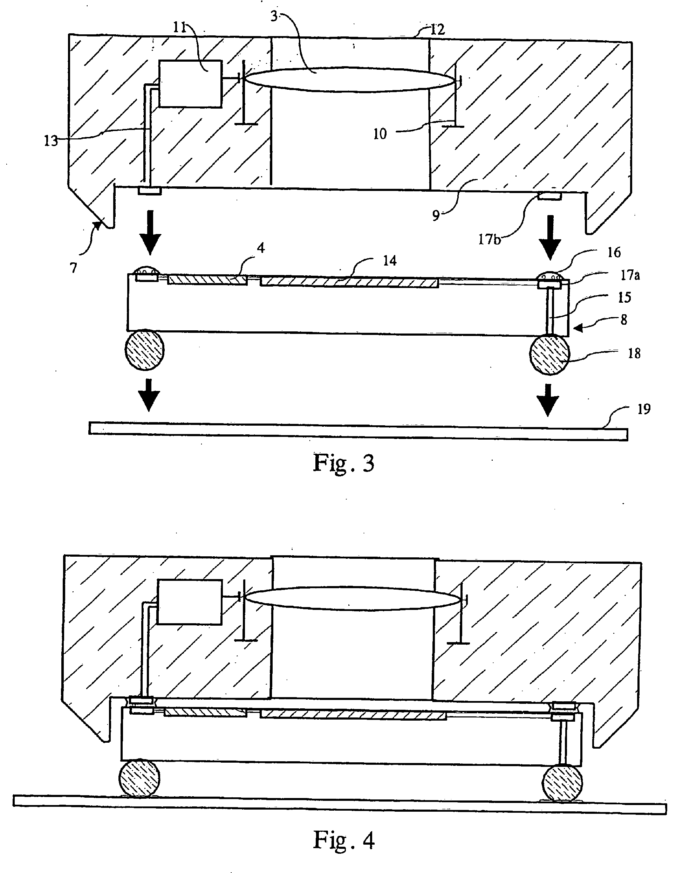

Le transfert des signaux d'image, des signaux de commande et de la puissance électrique entre le bloc optique 7, la puce optique 8 et la carte mère 19 est assuré par des connexions internes au module de caméra, réalisées selon le procédé illustré sur la figure 3.

Ainsi, en se référant à la figure 3, la puce optique 8 rassemble sur une première face d'un substrat semi-conducteur (par exemple en silicium) le capteur d'image 14 et le microprocesseur 4. Elle comporte des interconnexions métalliques traversantes 15, connues sous le nom de « vias » par l'homme du métier, traversant le substrat. Ces vias 15 associés à des billes de connexion 18 fixées sur les extrémités de ces vias apparaissant sur une seconde face du substrat opposée à la première face, assurent le transfert de puissance électrique nécessaire à la puce optique 8 et aux moyens de focalisation 11, ainsi qu'au transfert de signaux d'image entre le microprocesseur 4 et la carte mère 19.

Le bloc optique 7 comprend, d'une part, un objectif 3 comprenant des lentilles mobiles le long d'une crémaillère 10 (une seule lentille est représentée sur la figure pour des raisons de simplicité), et d'autre part, des moyens de focalisation 11 comprenant par exemple un moteur et des engrenages permettant d'ajuster la position des lentilles mobiles le long de la crémaillère 10, ainsi que des éléments de connexion 13 du moteur pour la transmission de la puissance électrique nécessaire et des signaux de commande provenant du microprocesseur 4. L'ensemble des éléments du bloc optique est intégré dans un logement 9 servant à la fois de cache optique pour le capteur d'image et de support pour l'objectif 3 et les moyens de focalisation 11. Le logement 9 est réalisé par exemple en polycarbonate opaque et présente une ouverture frontale 12 d'objectif.

La puce optique 8 et le bloc optique 7 sont pourvus de première et seconde zones de contact 17a, 17b respectives en regard l'une de l'autre.

Les connexions électriques entre le bloc optique 7 et la puce optique 8 sont assurées par un moyen de fixation 16 assurant également la solidarisation de ces deux éléments. Ce moyen de fixation 16, par exemple constitué d'une colle conductrice anisotrope, est interposée entre la première et la seconde zones de contact 17a, 17b. On obtient ainsi le dispositif représenté sur la figure 4.

L'intégration du microprocesseur 4 sur la puce optique 8 permet ainsi d'intégrer également toutes les connexions d'une part entre le bloc optique 7 et la puce optique 8, et d'autre part entre la puce optique 8 et la carte mère 19.

## Revendications

1. Dispositif comportant un module de caméra à mise au point automatique comprenant lui-même une puce optique (8) et un bloc optique (7), ledit bloc optique intégrant au moins un objectif (3), au moins un moyen de focalisation (11) permettant de régler la mise au point dudit objectif (3), ladite puce optique (8) intégrant au moins un capteur d'image (14) et un microprocesseur (4) placés sur une première face d'un substrat de ladite puce optique (8), le microprocesseur (4) recevant des signaux d'image provenant dudit capteur d'image (14) et élaborant, sur la base desdits signaux d'image, un signal de commande qui est appliqué audit moyen de focalisation (11) pour assurer la mise au point dudit objectif (3), ladite puce optique (8) et ledit bloc optique (7) étant pourvus au moins de première et seconde zones de contact (17a, 17b) respectives en regard l'une de l'autre et d'un moyen de fixation (16) dudit bloc optique (7) à ladite puce optique (8),
**caractérisé en ce que** lesdites première et seconde zones de contact (17a, 17b) et ledit moyen de fixation assurent au moins une connexion électrique entre ledit microprocesseur (4) et ledit moyen de focalisation (11).

2. Dispositif selon la revendication 1, **caractérisé en ce que** ledit moyen de fixation (11) est une colle conductrice anisotrope interposée entre lesdites première et seconde zones de contact (17a, 17b).

3. Dispositif selon l'une quelconque des revendications 1 à 2, **caractérisé en ce qu'**il comprend une carte de circuit imprimé (19) et **en ce que** ladite puce optique (8) est montée sur la carte de circuit imprimé (19) par au moins une liaison électrique assurant le transfert de puissance électrique de ladite carte de circuit imprimée vers ladite puce optique (8) et ledit bloc optique (7).

4. Dispositif selon l'une quelconque des revendications 1 à 3, **caractérisé en ce qu'**il comprend une carte de circuit imprimé (19) et **en ce que** ladite puce optique (8) est montée sur ladite carte de circuit imprimé (19) par au moins une liaison électrique assurant le transfert desdits signaux d'image entre ladite carte de circuit imprimé (19) et ladite puce optique (8).

5. Dispositif selon l'une quelconque des revendications 3 à 4, **caractérisé en ce que** ladite liaison électrique comprend au moins une interconnexion métallique traversante (15), disposée dans ledit substrat de ladite puce optique (8) et au moins une bille de connexion (18) fixée sur une extrémité de ladite interconnexion métallique traversante (15) apparaissant sur une seconde face du substrat, opposée à ladite première face de ladite puce optique (8).

6. Dispositif selon l'une quelconque des revendications 1 à 5, **caractérisé en que** qu'il est constitué d'un appareil photo.

7. Dispositif selon l'une quelconque des revendications 1 à 5, **caractérisé en que** qu'il est constitué d'une caméra.

8. Téléphone mobile **caractérisé en qu'**il comprend un dispositif selon l'une quelconque des revendications 1 à 7.

9. Procédé de fabrication d'un dispositif comportant un module de caméra à mise au point automatique comprenant des étapes de :
- fabrication d'un bloc optique (7) intégrant au moins un objectif (3), et au moins un moyen de focalisation (11) permettant de régler la mise au point dudit objectif (3) ;
- fabrication d'une puce optique (8) intégrant au moins un capteur d'image (14) et un microprocesseur (4) placés sur une première face d'un substrat de ladite puce optique, le microprocesseur (4) recevant des signaux d'image provenant dudit capteur d'image (14) et élaborant, sur la base desdits signaux d'image, un signal de commande qui est appliqué audit moyen de focalisation (11) pour assurer la mise au point dudit objectif (3) ;
**caractérisé en qu'**il comprend en outre un étape d'interposition d'un moyen de fixation (16) dudit bloc optique (7) à ladite puce optique (8) entre des première et seconde zones de contacts (17a, 17b) de ladite puce optique (8) et dudit bloc optique (7), respectives en regard l'une de l'autre, lesdites première et seconde zones de contact (17a, 17b) et ledit moyen de fixation (16) assurant au moins une connexion électrique entre ledit microprocesseur (4) et ledit moyen de focalisation (11).

10. Procédé selon la revendication 9, **caractérisé en ce que** le moyen de fixation est une colle conductrice (16) assurant la transmission de signaux et/ou l'alimentation.

11. Procédé selon la revendication 9 ou 10, **caractérisé en ce qu'**il comprend une étape de fixation d'au moins une bille de connexion (18) à une extrémité d'une interconnexion métallique traversante (15) disposée dans le substrat et apparaissant sur une seconde face dudit substrat opposée à ladite première face, et une étape de fixation et de connexion dudit module de caméra sur une carte de circuit imprimée (19) à l'aide de ladite bille de connexion (18).

## Claims

1. Device including a camera module with automatic focusing itself including an optical chip (8) and an optical block (7), the said optical block integrating at least one lens (3), at least one focusing means (11) for adjusting the focus of the said lens (3), the said optical chip (8) integrating at least one image sensor (14)and a microprocessor (4) placed on a first face of a substrate of the said optical chip (8), the microprocessor (4) receiving the image signals from the said image sensor (14) and generating, on the basis of the said image signals, a control signal which is applied to the said focusing means (11) to focus the said lens (3), the said optical chip (8) and the said optical block (7) provided with at least first and second respective contact areas (17a, 17b) facing each other and means (16) for attaching the said optical block (7) to the said optical chip (8),
**characterized in that** the said first and second contact areas (17a, 17b) and the said attaching means ensure at least one electrical connection between the said microprocessor (4) and the said focusing means (11).

2. Device according to claim 1, **characterized in that** the said attaching means (11) is an anisotropic conductive glue placed between the said first and second contact areas (17a, 17b).

3. Device according to any one of claims 1 to 2, **characterized in that** it includes a printed circuit board (19) and **in that** the said optical chip (8) is installed on the printed circuit board (19) by at least one electrical connection transferring electrical power from the said printed circuit board to the said optical chip (8) and to the said optical block (7).

4. Device according to any one of claims 1 to 3, **characterized in that** it includes a printed circuit board (19) and **in that** the said optical chip (8) is installed on the said printed circuit board (19) by at least one electrical connection transferring the said image signals between the said printed circuit board (19) and the said optical chip (8).

5. Device according to any one of claims 3 to 4, **characterized in that** the said electrical connection includes at least one through metallic interconnection (15) placed in the said substrate of the said optical chip (8) and at least one connection ball (18) attached to one end of the said through metallic interconnection (15) appearing on a second face of the substrate opposite the said first face of the said optical chip (8).

6. Device according to any one of claims 1 to 5, **characterized in that** it consists of a still camera.

7. Device according to any one of claims 1 to 5, **characterized in that** it consists of a movie camera.

8. Mobile telephone **characterized in that** it includes a device according to any one of claims 1 to 7.

9. Process for manufacturing a device including a camera module with automatic focusing including the following steps:
- manufacture of an optical block (7) integrating at least one lens (3), and at least one focusing means (11) for adjusting the focus of the said lens (3);
- manufacture of an optical chip (8) integrating at least one image sensor (14) and a microprocessor (4) placed on a first face of a substrate of the said optical chip; the microprocessor (4) receiving image signals originating from the said image sensor (14) and generating a control signal, based on the said image signals, which is applied to the said focusing means (11) to focus the said lens (3);
**characterized in that** it also includes an interfay step for the means (16) for attaching the said optical block (7) to the said optical chip (8) between the first and second contact areas (17a, 17b) of the said optical chip (8) and of the said optical block (7), facing each other, the said first and second contact areas (17a, 17b) and the said attaching means (16) ensuring at least an electrical connection between the said microprocessor (4) and the said focusing means (11).

10. Process according to claim 9, **characterized in that** the attaching means is a conductive glue (16) ensuring the transmission of signals and/or power supply.

11. Process according to either claim 9 or 10, **characterized in that** it includes a step for attaching at least one connection ball (18) to one end of a through metallic interconnection (15) located in the substrate and appearing on a second face of the said substrate opposite the said first face, and a step for attaching and connecting the said camera module on a printed circuit board (19) using the said connection ball (18).

## Patentansprüche

1. Vorrichtung, umfassend ein Autofokus-Kameramodul, welches wiederum einen Optikchip (8) einen Optikblock (7) aufweist, in den zumindest ein Objektiv (3) und zumindest eine Fokussiereinrichtung (11) zur Scharfeinstellung des Objektivs (3) integriert sind, wobei in den Optikchip (8) zumindest ein Bildsensor (14) und ein Mikroprozessor (4) integriert und auf einer ersten Substratfläche des Optikchips (8) angeordnet sind, wobei der Mikroprozessor (4) Bildsignale von dem Bildsensor (14) empfängt und auf der Grundlage dieser Bildsignale ein Befehlssignal erzeugt, das an die Fokussiereinrichtung (11) angelegt wird, um die Scharfeinstellung des Objektivs (3) zu gewährleisten, wobei der Optikchip (8) und der Optikblock (7) jeweils mit mindestens einer ersten und einer zweiten Kontaktzone (17a, 17b), die einander gegenüberliegen, und mit einem Mittel (16) zur Festlegung des Optikblocks (7) an dem Optikchip (8) versehen sind,
**dadurch gekennzeichnet,**
**dass** die ersten und zweiten Kontaktzonen (17a, 17b) und das Festlegungsmittel zumindest eine elektrische Verbindung zwischen dem Mikroprozessor (4) und der Fokussiereinrichtung (11) gewährleisten.

2. Vorrichtung nach Anspruch 1, **dadurch gekennzeichnet, dass** das Festlegungsmittel (11) ein anisotroper elektrisch leitender Klebstoff ist, der zwischen der ersten und der zweiten Kontaktzone (17a, 17b) angeordnet ist.

3. Vorrichtung nach einem der Ansprüche 1 bis 2, **dadurch gekennzeichnet, dass** sie eine gedruckte Schaltungskarte (19) aufweist und dass der Optikchip (8) über wenigstens eine elektrische Verbindung, die die Übertragung der elektrischen Leistung von der gedruckten Schaltungskarte zu dem Optikchip (8) und zu dem Optikblock (7) gewährleistet, auf der gedruckten Schaltungskarte (19) montiert ist.

4. Vorrichtung nach einem der Ansprüche 1 bis 3, **dadurch gekennzeichnet, dass** sie eine gedruckte Schaltungskarte (19) umfasst und dass der Optikchip (8) über zumindest eine elektrische Verbindung, die die Übertragung der Bildsignale zwischen der gedruckten Schaltungskarte und dem Optikchip (8) gewährleistet, auf der gedruckten Schaltungskarte (19) montiert ist.

5. Vorrichtung nach einem der Ansprüche 3 bis 4, **dadurch gekennzeichnet, dass** die elektrische Verbindung zumindest eine metallische Durchsteckverbindung (15) umfasst, die in dem Substrat des Optikchips (8) vorgesehen ist, und eine Verbindungskugel (18), die an einem Ende der metallischen Durchsteckverbindung (15) befestigt ist, die an einer zweiten Fläche des Substrats, die der ersten Fläche des Optikchips (8) gegenüberliegt, erscheint.

6. Vorrichtung nach einem der Ansprüche 1 bis 5, **dadurch gekennzeichnet, dass** diese durch einen Fotoapparat gebildet wird.

7. Vorrichtung nach einem der Ansprüche 1 bis 5, **dadurch gekennzeichnet, dass** diese durch eine Kamera gebildet wird.

8. Mobiltelefon, **dadurch gekennzeichnet, dass** dieses eine Vorrichtung nach einem der Ansprüche 1 bis 7 umfasst.

9. Verfahren zur Herstellung einer Vorrichtung mit einem Autofokus-Kameramodul, umfassend die folgenden Schritte:
- Herstellung eines Optikblocks (7), in den zumindest ein Objektiv (3) und zumindest eine Fokussiereinrichtung (11) zur Scharfeinstellung des Objektivs (3) integriert sind;
- Herstellung eines Chipblocks (8), in den zumindest ein Bildsensor (14) und ein Mikroprozessor (4), die auf einer ersten Fläche eines Substrats des Optikchips (8) angeordnet sind, integriert sind, wobei der Mikroprozessor (4) Bildsignale von dem Bildsensor (14) empfängt und auf der Grundlage dieser Bildsignale ein Befehlssignal erzeugt, das an die Fokussiereinrichtung (11) angelegt wird, um die Scharfeinstellung des Objektivs (3) zu gewährleisten;
**dadurch gekennzeichnet,**
**dass** das Verfahren darüber hinaus einen Schritt umfasst für die Anbringung eines Mittels (16) zur Festlegung des Optikblocks (7) an dem Optikchip (8) zwischen der ersten und der zweiten der einander gegenüberliegenden Kontaktzonen (17a, 17b) des Optikchips (8) und des Optikblocks (7), wobei die erste und die zweite Kontaktzone (17a, 17b) und das Festlegungsmittel (16) zumindest eine elektrische Verbindung zwischen dem Mikroprozessor (4) und der Fokussiereinrichtung (17) gewährleisten.

10. Verfahren nach Anspruch 9, **dadurch gekennzeichnet, dass** das Festlegungsmittel ein elektrisch leitender Klebstoff (16) ist, der die Signalübertragung und/oder Stromversorgung gewährleistet.

11. Verfahren nach Anspruch 9 oder 10, **dadurch gekennzeichnet, dass** dieses einen Schritt zur Festlegung von zumindest einer Verbindungskugel (18) an einer metallischen Durchsteckverbindung (15) gewährleistet, die in dem Substrat vorgesehen ist und an einer der ersten Fläche gegenüberliegenden zweiten Fläche des Substrats erscheint, und einen Schritt zur Festlegung und Verbindung des Kameramoduls auf und mit einer gedruckten Schaftungskarte (19), mit Hilfe der Verbindungskugel (18).
